# EUROPEAN PATENT APPLICATION

(11) **EP 1 956 416 A1**
(43) Date of publication of application: **13.08.2008**
(21) Application number: 06821915.3
(22) Date of filing: 18.10.2006
(51) Int. Cl.: G02C 9/00, B29D 12/02

(54) **SYSTEM FOR PRODUCING GLASSES-USE AUXILIARY OPTICAL MEMBER, METHOD FOR PRODUCING GLASSES-USE AUXILIARY OPTICAL MEMBER, COMPUTER PROGRAM PRODUCT**

(30) Priority: 21.10.2005 JP 2005307124
(71) Applicant: NIKON-ESSILOR CO., LTD., Tokyo 130-0026 (JP)
(72) Inventor: URABE, Masanobu, Tokyo 130-0026 (JP); MOMMA, Tsukasa, Tokyo 130-0026 (JP)
(74) Representative: Viering, Jentschura & Partner
(86) International application number: PCT/JP2006/320713
(87) International publication number: WO 2007/046401

(57) **Abstract**

A system for producing various optical members to be used by being attached to eyeglasses for assisting a function the eyeglasses, includes: a terminal device that transmits an ordering data for ordering an optical member based on eyeglasses information relating to the eyeglasses; a processing data calculating device that calculates a processing data for three-dimensionally processing the optical member based on the ordering data transmitted by the terminal device; and a work instructing device that performs a work instruction relating to three-dimensional processing of the optical member based on the processing data calculated by the processing data calculating device.

## Description

### TECHNICAL FIELD

The present invention relates to production of various optical members used as attached to eyeglasses for assisting their functions.

### BACKGROUND ART

Heretofore, there have been known various optical members used as attached to eyeglasses for assisting their functions. For example, there are colored ones for allowing eyeglasses to be used as sunglasses, ones having a polarizing effect, ones used as correction lenses for correcting a degree of eyeglasses, and so on. These optical members are generally called "clip-ons (clip-on members) " and are attached to frame parts and lens parts of the eyeglasses.

Clip-ons generally are fabricated in sizes somewhat greater than those of ordinary eyeglasses so that they can be attached commonly to eyeglasses of various shapes. However, when such ill-fitted clip-ons are mounted, there may occur uncomfortable feeling on the appearance thereof. Accordingly, there is known a method of producing clip-ons having a size fitted to eyeglasses by obtaining a contour of eyeglasses in an electronic form and editing it to forma secondary expression of clip-on (see Patent Document 1).

Patent Document 1: Japanese Translation of PCT International Application No. 2005-510748.

### SUMMARY OF THE INVENTION

### PROBLEM TO BE SOLVED BY THE INVENTION

In the method of producing clip-ons disclosed in Patent Document 1, although the contour of eyeglasses is taken into consideration, no spatial configuration such as a curved shape of a surface of a lens is taken into consideration. Therefore, sometimes it may be difficult to produce clip-ons that are fitted to eyeglasses. As a result, for example, there may occur mismatching between three-dimensional positions and shapes of the clip-on and the eyeglasses, thus making it difficult to correctly attach the clip-on to the eyeglasses, or the lenses of the eyeglasses and the clip-on may be brought in contact with each other, which when vibrated in this state may cause grazing of the lenses of the eyeglasses with the clip-on, to form damages on the surfaces thereof.

### MEANS FOR SOLVING THE PROBLEM

According to the 1st aspect of the present invention, a system for producing various optical members to be used by being attached to eyeglasses for assisting a function the eyeglasses, comprises: a terminal device that transmits an ordering data for ordering an optical member based on eyeglasses information relating to the eyeglasses; a processing data calculating device that calculates a processing data for three-dimensionally processing the optical member based on the ordering data transmitted by the terminal device; and a work instructing device that performs a work instruction relating to three-dimensional processing of the optical member based on the processing data calculated by the processing data calculating device.
According to the 2nd aspect of the present invention, in the system for producing an auxiliary optical member for eyeglasses according to the 1st aspect, it is preferred that the work instructing device performs an instruction as to a mold to be used upon hot molding the optical member as a work instruction relating to the three-dimensional processing of the optical member.
According to the 3rd aspect of the present invention, in the system for producing an auxiliary optical member for eyeglasses according to the 2nd aspect, it is preferred that the mold to be used is selected based on a shape of a surface curve of an eyeglasses lens in the eyeglasses.
According to the 4th aspect of the present invention, in the system for producing an auxiliary optical member for eyeglasses according to the 1st or 2nd aspect, it is preferred that the eyeglasses information relating to the eyeglasses includes information from which a shape of an eyeglasses lens to be used for the eyeglasses is known.
According to the 5th aspect of the present invention, in the system for producing an auxiliary optical member for eyeglasses according to any one of the 1st to 4th aspects, it is preferred that the processing data includes a data used commonly for a work instruction relating to processing of the optical member and a work instruction relating to processing of the eyeglasses.
According to the 6th aspect of the present invention, in the system for producing an auxiliary optical member for eyeglasses according to any one of the 1st to 5th aspects, it is preferred that the processing data includes at least one of a functional film selection data for selecting a functional film used for the optical member, a lens selection data for selecting an eyeglasses lens used for the eyeglasses, and a lens shape processing data for processing the eyeglasses lens so as to conform to a shape of an eyeglasses frame.
According to the 7th aspect of the present invention, in the system for producing an auxiliary optical member for eyeglasses according to any one of the 1st to 6th aspects, it is preferred that the processing data includes a fixing member selection data for performing an work instruction relating to processing for fitting, to the optical member, a fixing member to be used when attaching the optical member to the eyeglasses.
According to the 8th aspect of the present invention, in the system for producing an auxiliary optical member for eyeglasses according to any one of the 1st to 7th aspects, it is preferred that the optical member is any one of a colored clip-on member for allowing a lens of the eyeglasses to be used as a colored lens, a polarization clip-on member having a polarizing effect, and a correction clip-on member that corrects degree of the eyeglasses.
According to the 9th aspect of the present invention, a computer readable computer program product comprises a program that is adapted to be used in the processing data calculating device in the system for producing an auxiliary optical member for eyeglasses according to any one of the 1st to 8th aspects, and that is adapted to calculate the processing data based on the ordering data.
According to the 10th aspect of the present invention, a method of producing various optical members to be used by being attached to eyeglasses for assisting a function of the eyeglasses, comprises: transmitting an ordering data for ordering an optical member based on eyeglasses information relating to the eyeglasses; calculating a processing data for three-dimensionally processing the optical member based on the ordering data; and performing a work instruction relating to three-dimensional processing of the optical member based on the processing data.

### ADVANTAGEOUS EFFECT OF THE INVENTION

According to the present invention, clip-ons having suitable shapes can be produced taking the three-dimensional shape of eyeglasses into consideration.

### BRIEF DESCRIPTION OF THE DRAWINGS

FIG. 1 is a schematic diagram illustrating the flow of processing according to an embodiment of the present invention;
FIG. 2 is a construction block diagram illustrating a system for producing a clip-on;
FIG. 3 is a diagram illustrating the flow of operations in whole in the system for producing a clip-on;
FIG. 4 is a diagram illustrating an example of a screen displayed on a terminal device when information on a wearer is input;
FIG. 5 is a schematic diagram illustrating a hot molding device used in three-dimensional processing of clip-ons;
FIG. 6 is a diagram illustrating how pressurization of a film is performed;
FIG. 7 is a table showing an example of each of a set temperature and a heating time of a heating oven as well as a pressure upon pressurization in an example of the hot molding apparatus;
FIG. 8 is a diagram presenting a table showing an example of thickness data of the prescription lens;
FIG. 9 is a diagram illustrating an example of a position at which a fastener is attached;
FIG. 10 is a diagram illustrating an example of how processing of attaching a fastener to eyeglasses is performed;
FIG. 11 is a diagram illustrating an example of a position at which a fastener is attached when the eyeglasses frame is a two-point type one;
FIG. 12 is a diagram showing an eyeglasses lens and a clip-on to which a fastener is attached to a determined attachment position; and
FIG. 13 is a diagram showing how a program is provided to a personal computer through a recording medium such as a CD (compact disc) or an electric communication line such as the Internet.

### BEST MODE FOR CARRYING OUT THE INVENTION

One embodiment of the present invention will be described hereinbelow. In the present embodiment, the content of the present invention is explainedonacase in which when a customer, who is a wearer, buys at an eyeglasses store a pair of eyeglasses anew to put them on him or her and also buys a clip-on to be used as attached to the eyeglasses. Note that the term "clip-on (clip-on member)" means various types of auxiliary optical members and includes, for example, colored one for allowing eyeglasses lenses to be used as colored lenses, one having a polarizing effect, and one used as correction lenses for correcting the degree of glasses.

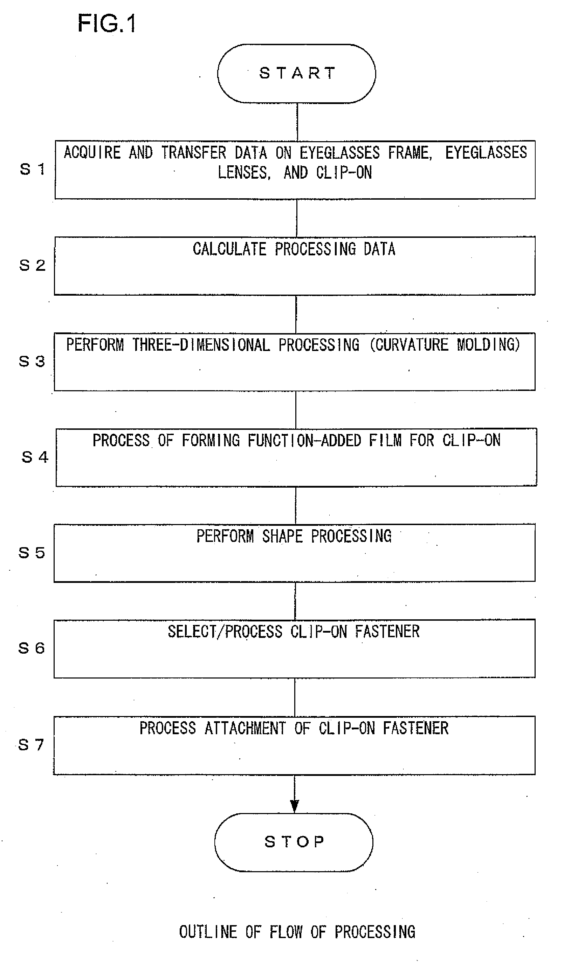

Referring to the flowchart shown in FIG. 1, a general outline of the flow of processing in the present embodiment is explained. In a step S1, a customer acquires an ordering data for buying an eyeglasses frame, eyeglasses lenses and a clip-on that the customer is going to buy at an eyeglasses store and transfer the data from the eyeglasses store to an information processing center. Note that the term "information processing center" means a facility that manages ordering data transferred from eyeglasses stores for each customer and performs processing instruction on eyeglasses and a clip-on based on the ordering data. The information processing center is set up, for example, on a company premise, a plant and so on of an eyeglasses manufacturer.

In a step S2, in the information processing center, the processing data used for processing instruction on eyeglasses lenses and a clip-on are calculated based on the ordering data transferred from the eyeglasses store in the step S1. The calculated processing data are transferred from the information processing center to an eyeglasses manufacturing plant.

In a step S3, in the eyeglasses manufacturing plant, a film is molded at a predetermined curvature based on the processing data calculated in the information processing center in the step S2 to perform three-dimensional processing of the clip-on. In a step S4, the clip-on processed in the step S3 is subjected to a suitable surface treatment to create a function-added film according to its function on the surface of the clip-on.

In a step S5, shape processing of the eyeglasses lenses and the clip-on is performed. This causes the eyeglasses lenses and the clip-on to be processed to suitable shapes in conformity with an eyeglasses frame. In a step S6, a fastener (a fixing member or an attacher) with which the clip-on is to be fixed or attached to the eyeglasses is selected and processing for attaching the fastener thereto is performed onto the clip-on and the eyeglasses. In a step S7, the fastener selected in the step S6 is attached to the clip-on and the eyeglasses. In the present embodiment, production of the clip-on and the eyeglasses is performed according to the flow of processing as mentioned above.

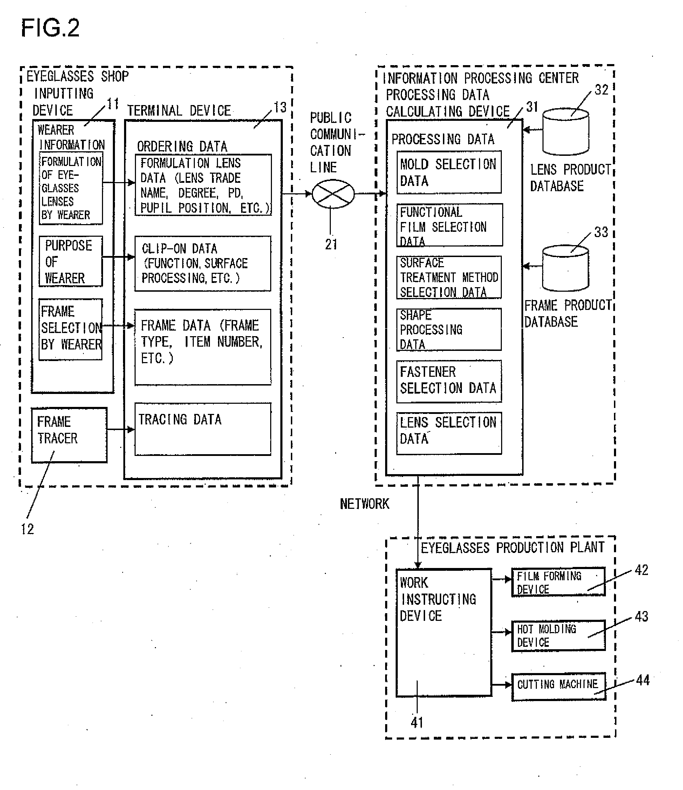

FIG. 2 shows a construction block diagram showing a system for producing clip-ons used in the present embodiment. The system for producing clip-ons includes various devices explained below, which are placed in an eyeglasses shop, an information processing center, and an eyeglasses production plant, respectively.

In the eyeglasses shop (the optician's shop), there are provided an inputting device 11, a frame tracer 12, and a terminal device 13. The inputting device 11 inputs wearer information that relates to the wearer of eyeglasses into the terminal device 13. It is realized by, for example, a keyboard or a mouse. When the inputting device 11 is operated by a salesperson or the like, information such as formulation of eyeglasses lenses for the wearer's eyeglasses lens measured and results of selection of an eyeglasses frame by the wearer when a pair of eyeglasses is purchased is input into the terminal device 13 as the wearer information. That is, the information on the eyeglasses that is worn by the wearer is input. Further, intended end-usage of the clip-on used as attached to the eyeglasses to be purchased is also input into the terminal device 13 as the wearer information.

The frame tracer 12 traces the three-dimensional shape of the eyeglasses frame selected by the wearer upon purchase and outputs its shape data to the terminal device 13 as tracing data. Note that it would also be acceptable to have respective shape data of eyeglasses frames that are available in the eyeglasses shop stored in the terminal device 13 or the information processing center in advance and to enable the shape data corresponding to the eyeglasses frame to be called up when a model number or the like of the eyeglass frame is designated on the terminal device 13. On this occasion it is unnecessary to acquire the tracing data, and hence the frame tracer 12 may be omitted.

The terminal device 13 prepares an ordering data for ordering a pair of eyeglasses and a clip-on based on various pieces of wearer information such as those mentioned above input by the inputting device 11. The ordering data includes formulation lens data, clip-on data, frame data, and tracing data.

The formulation lens data describes an item name and the degree of a lens (prescription lens) used as an eyeglasses lens after processing and further the position of pupil and a PD (Pupil Distance) when the wearer wears the eyeglasses and so on. The clip-on data describes the function of and the manner of surface treatment of the clip-on and so on. The frame data describes a type and an item number of the eyeglasses frame and so on. The tracing data is a data of the three-dimensional shape of the eyeglasses frame acquired by the frame tracer 12 as mentioned above.

The information processing center is provided with a processing data calculating device 31, a lens product database 32, anda frame product database 33. The ordering data prepared as mentioned above in the terminal device 13 set in the eyeglasses shop is transmitted from the terminal device 13 to the processing data calculating device 31 through a public communication line 21 such as the Internet.

The processing data calculating device 31 receives the ordering data transferred from the terminal device 13. Then the processing data calculating device 31 searches the lens product database 32 or the frame product database 33 as necessary and calculates a processing data for performing a work instruction upon processing the eyeglasses lenses and the clip-on based on the result of the search and on the received ordering data. Note that the lens product database 32 and the frame product database 33 store data on various types of prescription lenses (lenses providing vision correction) and eyeglasses frames to form databases. For example, the lens product database 32 stores data including item names and item numbers of unprocessed prescription lenses, lens shapes such as thickness and diameter, degrees, and refractive indices and so on. The frame product database 33 stores data including item names and item numbers of eyeglasses frames, and frame types such as Nylor and Two-point and so on.

The processing data calculated in the processing data calculating device 31 include various types of data as described below.

A mold selection data is a data for selecting a mold to be used when three-dimensionally processing a clip-on. The processing data calculating device 31 decides which mold is to be used at the time of processing the clip-on according to the shape of a prescription lens that is searched in the lens product database 32 based on the information such as the item name of lens contained in the formulation lens data.

The functional film selection data is a data for selecting a functional film to be used as a material for a clip-on. The surface treatment process selection data is a data for selecting a surface treatment process to be applied to the clip-on. The processing data calculation device 31 decides which functional film or surface treatment process is to be used based on the function and manner of surface processing of the clip-on.

The shape processing data is a data used in shape processing in which an eyeglasses lens and a clip-on are processed into shapes in conformity with an eyeglasses frame. The processing data calculating device 31 decides the shape of the lens and the clip-on subjected to shape processing based on the shape of prescription lenses searched in the lens product database 32, the shape of eyeglasses frame searched in the frame product database 33, information on pupil position or PD contained in the formulation lens data from among the ordering data, tracing data and the like.

The fastener selection data is a data for selecting a fastener to be used when attaching the clip-on to a pair of eyeglasses and performing processing according to the fastener to the clip-on and the pair of eyeglasses. The processing data calculating device 31 decides the fastener to be used based on the shape of prescription lenses searched in the lens product database 32, the shape of eyeglasses frame searched in the frame product database 33, the type of frame indicated by the frame data from among the ordering data and the like and also decides a processing process to be applied to the clip-on and the eyeglasses according to the decided fastener.

The lens selection data is a data for selecting prescription lenses to be used for eyeglasses lenses. The processing data calculating device 31 decides the prescription lenses to be used for eyeglasses lenses based on the item name and degree of the prescription lenses indicated by the formulation lens data from among the ordering data. Various data mentioned above are included in the processing data.

The eyeglasses production plant is provided with a work instructing device 41, a film forming device 42, a hot molding device 43, and a cutting machine 44. The processing data calculated by the processing data calculating device 31 installed in the information processing center is output from the processing data calculating device 31 to the work instructing device 41 through a dedicated network.

The work instructing device 41 receives the processing data sent from the processing data calculating device 31, and based on the processing data, performs a work instruction by displaying information necessary for a worker when he or she works the clip-on and eyeglasses lenses on a screen. By this display on the screen, the number of the mold to be used upon three-dimensional processing on the clip-on, the number of the film to be used as a material of the clip-on, and the kind of the fastener to be attached to the clip-on and the eyeglasses in order to attach the clip-on to the eyeglasses are instructed.

The processing data calculating device 31 further performs a work instruction by outputting information necessary for respective processing works to the film forming device 42, the hot molding device 43, and the cutting machine 44 based on the received processing data. The film forming device 42 is a device configured to perform a surface treatment on a clip-on, and a vacuum depositing machine and a dipping coater and so on are used as such. For example, information on a coating composition to be used and a film forming process decidedbased on the above-mentioned surface treatment process selection data is output from the work instructing device 41 as information necessary for processing works by the film forming device 42.

The hot molding device 43 is a device configured to perform three-dimensional processing of a clip-on and hot-molds the clip-on into a shape that conforms to the mold set by the worker. For example, the information such as heating temperature and heating time decided based on the above-mentioned functional film selection data is output from the work instructing device 41 as the information necessary for the processing works by the hot molding device 43.

The cutting machine 44 is a device configured to perform shape processing on the clip-on and the eyeglasses lenses. For example, the information such as processing shapes decided based on the above-mentioned shape processing data is output from the work instructing device 41 as the information necessary for processing works by the cutting machine 44.

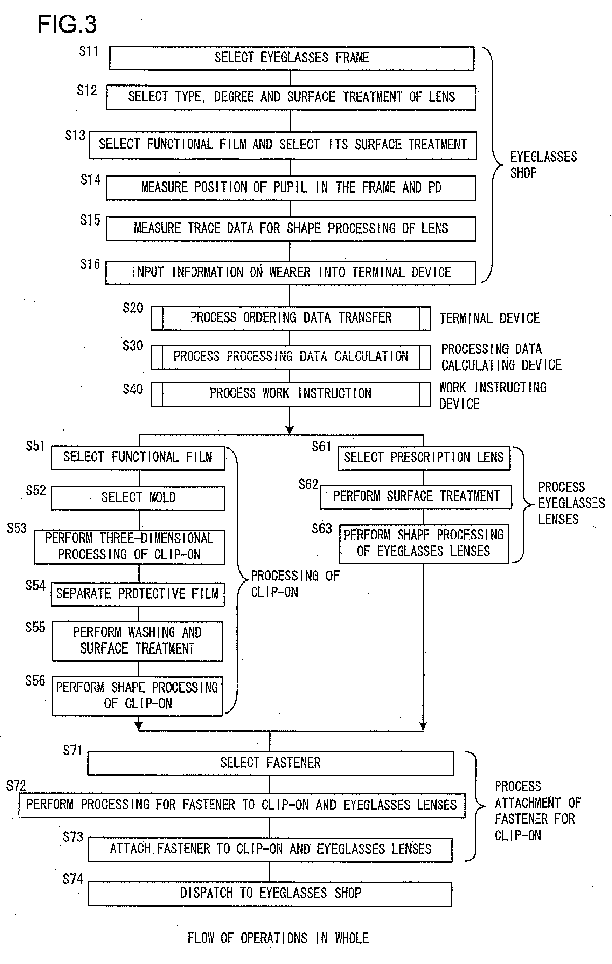

FIG. 3 shows the flow of overall operations in the system for producing clip-ons described above. Steps S11 to S16 illustrate actions of a customer, i.e., wearer at an eyeglasses shop and a salesperson of the eyeglasses shop. In the step S11, the customer selects an eyeglasses frame. In the step S12, the salesperson prepares a formulation for the wearer and based thereon, the type, degree, surface treatment process and so on of the eyeglasses lenses are selected. In the step S13, the customer decides the usage of a clip-on and based thereon, a functional film used for the clip-on and a surface treatment process therefor are selected.

In the step S14, the salesperson measures the pupil position and the PD when the customer wears the selected eyeglasses frame. In the step S15, the salesperson measures trace data for performing shape processing of the eyeglasses lenses using the frame tracer 12. In the step S16, the salesperson operates the inputting device 11 to thereby input the results of selections and the results of measurements in the steps S11 to S15 into the terminal device 13 as the above-mentioned wearer information.

In a step S20, ordering data transfer processing is performed by the terminal device 13. In the ordering data transfer processing, an ordering data is prepared based on the wearer information input in the step S16 and then the ordering data is transferred to theprocessingdata calculating device 31. The processing in the step S20 is performed by the terminal device 13 when the terminal device 13 executes a program installed therein.

In a step S30, processing data calculation processing is performed by the processing data calculating device 31. In this processing data calculation processing, after receipt of the ordering data transferred from the terminal device 13 in the step S20, the lens product database 32 and the frame product database 33 are searched as necessary as mentioned above. Then, based on the content of the ordering data and on the result of the search on the databases, calculation of processing data including various data as mentioned above is performed. Once the processing data is calculated, it is output to the work instructing device 41. The processing in the step S30 is performed by the processing data calculating device 31 when the processing data calculating device 31 executes a program installed therein.

In a step S40, work instructing processing is performed to the worker as well as to the film forming device 42, the hot molding device 43 and the cutting machine 44 by the work instructing device 41 based on the processing data calculated in the processing data calculating processing in the step S30. The processing in the step S40 is performed by the work instructing device 41 when the work instructing device 41 executes a program installed therein. According to the work instruction, the processing of the clip-on in steps S51 to S56, the processing of eyeglasses lenses in steps S61 to S63, and attachment processing of the clip-on fastener in steps S71 to S73 explained hereinbelow are performed.

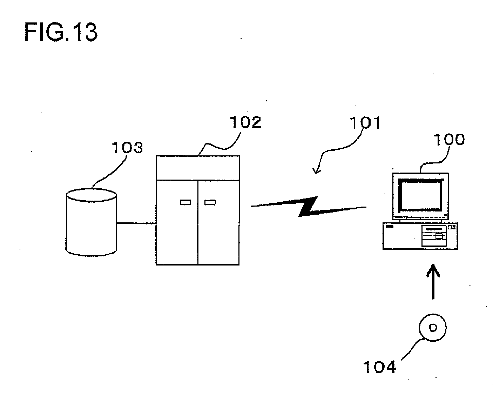

Note that the programs executed by the terminal device 13, the processing data calculating device 31, and the work instructing device 41, respectively, can be provided through a recording medium such as CD-ROM or data signals such as those in the Internet. FIG. 13 is a diagram illustrating how it is achieved. Explanation is made assuming that the terminal device 13, the processing data calculating device 31, and the work instructing device 41 are each constituted by a personal computer 100.

The personal computer 100 is provided with a program through a CD-ROM 104. Also, the personal computer 100 has a function of being connected with a communication line 101. A computer 102, which is a server computer that provides the program, stores the program in a recording medium such as a hard disk 103. The communication line 101 is a communication line such as the Internet or personal computer communication, or a dedicated communication line. The computer 102 reads out the program from the hard disk 103 and transmits the program to the personal computer 100 through the communication line 101. That is, the program is transmitted through the communication line 101 as carried on a carrier wave as a data signal. In this manner the program can be supplied as a computer-readable program product in various forms such as a recording medium and a carrier wave.

In the steps S51 to S56, processing of the clip-on is performed. In the step S51, according to the instruction by the work instructing device 41, the worker selects a functional film to be used for the clip-on. The functional film includes various types according to the functions of the clip-ons, for example, a color film, a polarization film, and a prescription film (a film providing vision correction). Note that the material of the functional film is decided taking durability and workability and so on into consideration; for example, a polycarbonate resin (PC) is used. The work instructing device 41 performs instruction as to which functional film is to be used based on the functional film selection data out of the processing data as mentioned above.

In the step S52, according to the instruction by the work instructing device 41, the worker selects a mold to be used upon hot molding the clip-on. The work instructing device 41 performs instruction as to which mold is to be used based on the mold selection data out of the processing data as mentioned above.

In the step S53, the worker sets the functional film selected in the step S51 and the mold selected in the step S52 in the hot molding device 43 and performs three-dimensional processing of the clip-on. The specific processing process on this occasion will be explained later on.

In the step S54, the worker separates the protective film applied to the surface of the clip-on three-dimensionally processed in the step S53. Note that a protective film is applied to the surface of the clip-on upon the three-dimensional processing so that its surface is not damaged during the hot molding. After the three-dimensional processing is completed in the step S53, the protective film is separated
from the clip-on in the step S54.

In the step S55, after the worker washes the clip-on from which the protective film has been separated in the step S54, the worker performs surface treatment using the film forming device 42 by the surface treatment process designated by the surface treatment process selection data. There are various types of surface treatments performed here including, for example, hard coat, reflection-proof coat, mirror coat, water-repellent coat, oil-repellent coat, antifogging coat, electromagnetic wave cut-off coat and so on. Also, molding of diffraction grating or the like by imprinting may be performed.

In the step S56, the worker performs shape processing using the cutting machine 44 on the clip-on which has been subjected to the surface treatment in the step S55. On this occasion, the shape processing data is common with the data of the shape processing of the eyeglasses lenses in the step S63 explained later on.

On the other hand, in the steps S61 to S63, processing of the eyeglasses lenses is performed. In the step S61, according to the instruction by the work instructing device 41, the worker selects unprocessed prescription lenses for eyeglasses lenses. The work instructing device 41 performs instruction as to which prescription lenses are to be used based on the lens selection data out of the processing data as mentioned above.

In the step S62, the worker performs surface treatment by the predetermined surface treatment process using the film forming device 42 on the prescription lenses selected in the step S61. In the step S63, the worker performs shape processing using the cutting machine 44 on the prescription lenses which have been subjected to the surface treatment in the step S62. The processing shape in this shape processing is decided based on the shape processing data out of the processing data. This allows the prescription lenses to be subjected to shape processing into a shape that matches the eyeglasses frame to complete eyeglasses lenses.

In the step S71 to S74, attachment processing of clip-on fastener is performed. In the step S71, according to the instruction by the work instructing device 41, the worker selects a fastener to be attached to the clip-on and the eyeglasses. The work instructing device 41 performs instruction as to which fastener is to be used based on the fastener selection data out of the processing data as mentioned above.

In the step S72, the worker performs processing for attaching the fastener selected in the step S71 to the clip-on and the eyeglasses lenses. In the step S73, the worker attaches the fastener selected in the step S71 to the clip-on and the eyeglasses lenses that have been processed in the step S72. This completes the eyeglasses and the clip-on in the eyeglasses production plant.

In the step S74, the eyeglasses completed in the step S73 is dispatched to the eyeglasses shop. Then, the eyeglasses are handed by the eyeglasses shop to the user. As explained above, eyeglasses and a clip-on having a shape that matches the eyeglasses are produced.

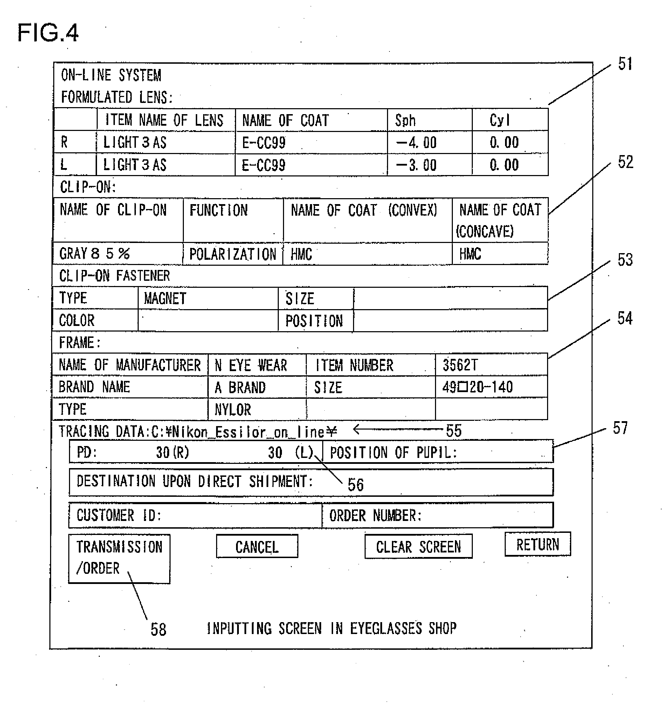

Next, explanation is made on the inputting screen for ordering a clip-on displayed on the terminal device 13 when the wearer information is input by referring to an example of screen shown in FIG. 4. Also, in the example of screen shown in FIG. 4, a display field 51 showing the contents of formulation lenses displays item name of prescription lens to be used, name of coat to be used in the surface treatment, degree (Sph), astigmatism degree (Cyl), and so on for each of right and left eyeglasses lenses. In a display field 52 showing the contents of a clip-on, there are displayed the name and function of the clip-on, a coat to be used in surface treatment, and so on.

A display field 53 showing the contents of a fastener attached to the clip-on and the eyeglasses displays the type, color, size, and position of the fastener. Note that when the color, size, position and so on are already decided for each fastener, it may be blank as shown in FIG. 4. A display field 54 showing the contents of eyeglasses frame displays the name of manufacturer, brand name, type, item number, size, and so on of the eyeglasses frame that the customer has selected.

A display field represented by reference numeral 55 displays the file name of tracing data transmitted to the processing data calculating device 31 as attachment. Display fields represented by reference numerals 56 and 57 display values of PD and pupil position, respectively, measured when the customer wears the selected eyeglasses frame. Note that, the data of reference numerals 51, 54, 57, etc. are automatically transcribed from the data input for ordering eyeglasses inclusive of formulation according to the type of the clip-on so as to serve as data for ordering the clip-on.

After it is confirmed on the screen that the various pieces of information as explained above are accurate, the sales person clicks a transmission/order button represented by reference numeral 58. Then, an ordering data corresponding to the displayed contents is prepared and transmitted from the terminal device 13 to the processing data calculating device 31.

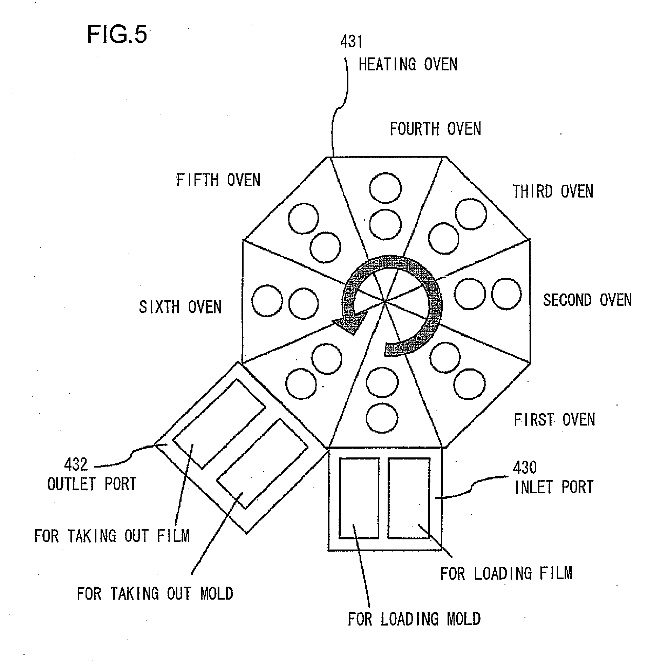

Next, explanation is made on the three-dimensional processing of the clip-on performed in the step S53 in FIG. 3. FIG. 5 is a schematic diagram of the hot molding device 43 used in the three-dimensional processing of the clip-on. The hot molding device 43 is provided with an inlet port 430, a heating oven 431, and an outlet port 432.

The inlet port 430 includes a mold inlet port for setting a mold and a film inlet port for setting a functional film used for the clip-on. When the worker selects a pair of a mold and a film according to the instruction by the work instructing device 41, he or she sets them in the mold inlet port and the film inlet port in the inlet port 430, respectively. Then, the film is automatically placed on the mold and is conveyed to the heating oven 431.

The heating oven 431 is separated into 6 parts in total, i.e., a first oven to a sixth oven with respective shutters or the like and the ovens are set to respective different temperatures. By moving the mold in which the film is placed as mentioned above through respective ovens for predetermined heating times in order, the film is heated to its moldable temperature. Then, by pressing the film at a predetermined pressure when it is in a fully heated state, the film is molded so as to conform to the mold. Thereafter, the mold is moved through the ovens to cool it and is conveyed to the outlet port 432.

The outlet port 432 includes a mold outlet port for taking out a mold and a film outlet port for taking out a molded film. The film conveyed to the outlet port 432 is separated from the mold by vacuum absorption so that no excessive force is urged to the surface of the film. Thereafter, the mold is taken out from the mold outlet port and the film is taken out from the film outlet port.

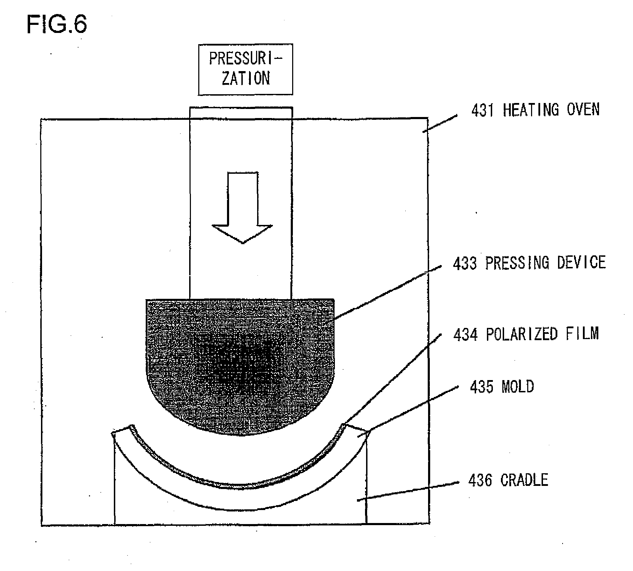

FIG. 6 illustrates the state of a film upon pressing. In the inside of the heating oven 431 is installed a pressing device 433 for pressing a film. The pressing device 433 includes a silicone resin, for example, at a front edge thereof so that the film can be uniformly pressed upon the pressing.

On a mold 435 mounted on a cradle 436, there is placed a film 434 to be used for the clip-on. After it is heated in the heating oven 431, the film 434 is pressed against the mold 435 with pressure by the pressing device 433 to mold the film to have a shape in conformity with the mold. In this manner, three-dimensional processing of the clip-on is performed.

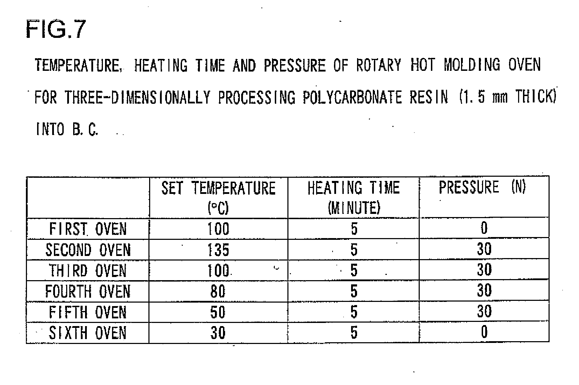

FIG. 7 shows an example of set temperature and heating time of the heating oven and the pressure upon pressing in the hot molding device 43. After the film is preliminarily heated for 5 minutes at a set temperature of 100°C in the first oven, it is heated to its moldable temperature in the second oven set to 135°C, and then the film is pressed at a pressure of 30N as shown in FIG. 6. On this occasion, the film is gradually pressed such that no excessive stress is applied to it. Thereafter, while maintaining the state of being pressed, the film is moved from the third oven to the fifth oven to decrease its film temperature, and finally reaches the sixth oven in which the pressing is ceased and it is cooled.

Note that the set values of the hot molding device 43 as described above may be varied according to the thickness and material of the film. The work instructing device 41 instructs a set value optimal to the film to the hot molding device 43 based on the functional film selection data contained in the processing data transmitted from the processing data calculating device 31. It would also be acceptable that the worker sets suitable set values to the hot molding device 43 according to the film to be used.

Next, explanation is made on the processing for fixing or attaching a fastener performed in the step S72 in FIG. 3. First, in the work instructing device 41, the position of the fastener to be attached or fixed to the eyeglasses lenses is decided based on tracing data contained in the processing data transmitted from the processing data calculating device 31 and the thickness data of the unprocessed prescription lenses used in the eyeglasses lenses represented by the lens selection data also contained in processing data.

The position of the fastener to be attached is decided by the following conditions. First, taking into consideration the size of the fastener, it is decided to be a position at which the thickness of the lens is equal to or more than a predetermined value, for example, equal to or more than 3 mm. Then, in order not to decrease the strength of the eyeglasses lens, it is decided to be a position remote from a rim of the lens by a predetermined value, for example, 5 mm or more. Further, in order not to prevent the field of view of the wearer, it is set to a position as remote as possible from the position of the pupil when the eyeglasses are worn.

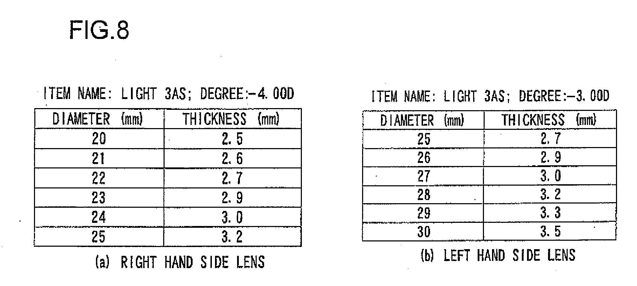

FIG. 8 shows an example of thickness data of a prescription lens. Table (a) indicates that the right hand side lens has a thickness of 3 mm or more with a diameter of 24 mm or more. On the other hand, the left hand side lens has a thickness of 3 mm or more with a diameter of 27 mm or more. The position at which the fastener is to be attached is decided within these ranges.

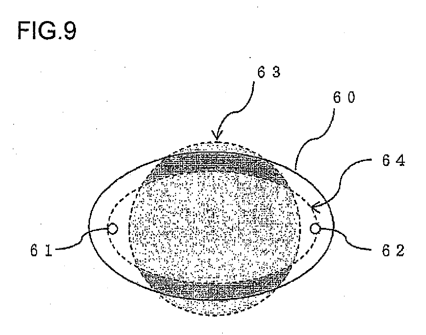

FIG. 9 shows an example of the position of the fastener that satisfies the above-explained conditions. The range represented by reference numeral 63 surrounded by a broken line is a range in which the thickness of the lens is 3 mm or less. Further, the range represented by reference numeral 64 surrounded by another broken line is a range in which it is 5 mm or more from the rim of the lens. In this case, the position of attachment of the fastener in the eyeglasses lens 60 is decided such that it ranges outside the range 63 and inside of the range 64 and is as remote as possible from the position of the pupil. Based on this, the positions of attachment of the fastener represented by reference numerals 61 and 62 are decided. Note that since the positions of attachment of the fastener as explained above is only exemplary, it may of course be another position of attachment.

Once the positions of attachment of the fastener in the eyeglasses lenses are decided as explained above, the positions of attachment of the fastener to the clip-on are decided to be the same positions as the eyeglasses lenses. Then, a predetermined processing such as boring a hole for attaching the fastener is performed at the decided position.

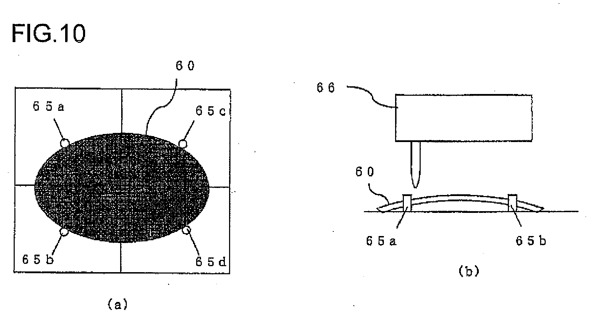

FIG. 10 shows an example of the manner of processing an eyeglasses lens for attaching a fastener thereto. FIG. 10 (a) shows the state as seen from above, inwhich the eyeglasses lens 60 is fixed to a positioning holder with fixing pins 65a, 65b, 65c, and 65d so that it will not move upon processing. FIG. 10(b) shows the state as seen from a side, in which a hole for attaching a fastener is formed at the decided position of attachment of the fastener to the eyeglasses lens 60 fixed to the positioning holder using a milling tool 66.

The clip-on is processed in the same manner as the above-mentioned eyeglasses lens. Note that the eyeglasses lens is formed of a hole in a surface on the side to which the clip-on is attached, that is, on the side of the front surface thereof, whereas the clip-on is formed of a hole in a surface on the side which is attached to the eyeglasses lens, that is, on the rear surface side. In this manner, processing for attaching the fastener is performed for each of the eyeglasses lens and the clip-on. Once the processing for attaching the fastener is performed, the fastener is attached, for example, by a method including inserting the fastener and fixing it with an adhesive.

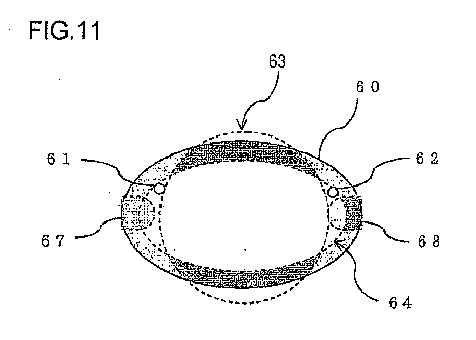

Note that in the case where it is impossible to perform processing for attaching the fastener in a portion of the eyeglasses lens, the position for attaching the fastener is decided to be a position keeping off that portion. Thisprocess is explained below with reference to FIG. 11.

FIG. 11 shows an example of the position of attachment of the fastener when the eyeglasses frame is of the two-point type. In the same manner as illustrated in FIG. 9, the range 63 surrounded by a broken line indicates a range in which the thickness of the lens is 3 mm or less and the range 64 surrounded by another broken line indicates a range in which it is 5 mm or more from the rim of the lens. In this case, the position of attachment of the fastener to the eyeglasses lens 60 is decided, in the same manner as in FIG. 9, to be in a range outside the range 63 and inside the range 64, and at a position as remote as possible from the position of the pupil.

In the case of FIG. 11, the position of attachment of the fastener is decided such that portions represented by reference numerals 67 and 68 to which the two-point eyeglasses frame is fixed are kept off. With this, the positions 61 and 62 of attachment of the fastener are decided.

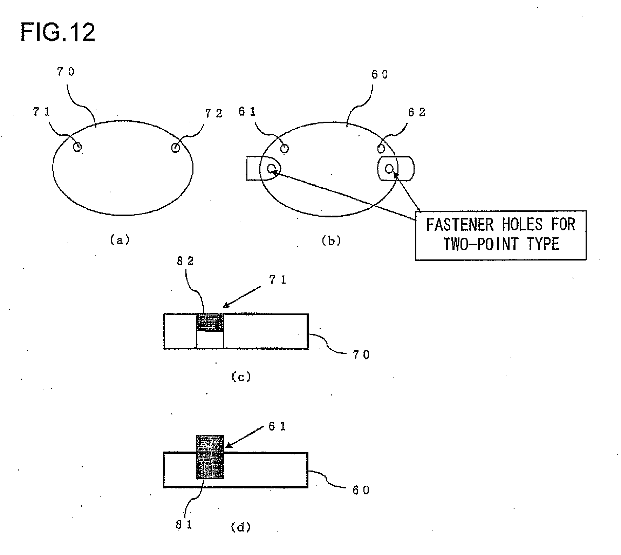

FIG. 12 shows the eyeglasses lens and clip-on to which the fastener is attached to the position of attachment decided as explained above. FIG. 12 (a) shows positions 71 and 72 of attachment of the fastener on the clip-on 70 and FIG. 12 (b) shows positions 61 and 62 of attachment of the fastener on the eyeglasses lens 60. The positions 71 and 72 on the clip-on 70 are decided so as to correspond to the positions 61 and 62 of attachment of the eyeglasses lens 60 decided as mentioned above.

FIG. 12 (c) is a cross-sectional view showing the clip-on 70 at the position 71 of attachment of the fastener and FIG. 12(d) is a cross-sectional view showing the eyeglasses lens 60 at the position 61 of attachment of the fastener. To the eyeglasses lens 60 and the clip-on 70 are attached respective fasteners 81 and 82 each including a magnet and as shown in the figures, the fastener 81 on the eyeglasses lens 60 side convexly protrudes from the attachment surface whereas the fastener 82 on the clip-on 70 side is concavely depressed from the attachment surface.

By fitting the convex portion of the fastener 81 and the concave portion of the fastener 82 to bring them into a state of being combined through magnetic force, the clip-on 70 is attached to the eyeglasses lens 60. With this construction, the clip-on becomes one that is easily attached and detached and is difficult to be misaligned or unfitted unexpectedly.

According to the embodiment explained above, the following effects can be obtained.
(1) Wearer information relating to the wearer of eyeglasses is input through the inputting device 11 (S16), and based on the inputter information, an ordering data is prepared and transmitted by the terminal device 13 (S20). Based on the transmitted ordering data, processing data for three-dimensional processing of the clip-on is calculated by the processing data calculating device 31 (S30), and based on the calculated processing data, a work instruction relating to the three-dimensional processing of the clip-on is performed (S40). With this procedure, a clip-on of a suitable shape can be produced taking into consideration the three-dimensional shape of the eyeglasses.

(2) To be concrete, the processing data including mold selection data for selecting a mold upon three-dimensional processing of the clip-on is calculated by the processing data calculating device 31 based on the ordering data. Then, by the work instructing device 41, the instruction as to the mold used upon hot molding the clip-on is performed to the worker based on the mold selection data in the processing data. With this, a clip-on having an appropriate shape can be produced taking into consideration the three-dimensional shape of the eyeglasses.

(3) In order to perform the instruction as to the mold by the work instructing device 41 as mentioned above, the processing data calculating device 31 selects a mold to be used based on the shape of a surface curve of an eyeglass lens in the eyeglasses to which a clip-on is attached, and transmits the result of selection as a mold selection data to the work instructing device 41. With this construction, a clip-on having an appropriate three-dimensional shape that does not contact the eyeglasses lens can be produced.

(4) The processing data is configured to include shape processing data representing processing shape when the clip-on and the eyeglasses lens are shape processed as a data used in common between the work instruction relating to the processing of a clip-on and the work instruction relating to the processing of eyeglasses. With this construction, the shape processing can be performed such that the data amount of the processing data is decreased to thereby decrease the transfer time and the clip-on and the eyeglasses lens has the same shape.

(5) The processing data is configured to include a functional film selection data for selecting a functional film to be used for the clip-on, a lens selection data for selecting the eyeglasses lens to be used for eyeglasses, or a lens shape processing data for processing the eyeglasses lens so as to conform to a shape of the eyeglasses frame. With this construction, an appropriate work instruction for producing the clip-on and eyeglasses can be performed.

(6) The processing data is configured to include a fastener selection data for performing work instruction relating to the processing for attaching to the clip-on the fastener tobe usedwhen attaching the clip-on to the eyeglasses. With this construction, the fastener to be used can be instructed based on the fastener selection data, or the position of attachment of the fastener can be instructed through the work instructing device 41 (S71, S72).

(7) Since a colored clip-on for using an eyeglasses lens as a colored lens, a polarization clip-on having a polarizing effect, a correcting clip-on for correcting degree of eyeglasses or the like can be used as the clip-on, the function of the eyeglasses can be assisted according to the purpose of the wearer.

Note that although in the above-mentioned embodiment, the work instruction device 41 is configured to perform work instruction relating on three-dimensional processing of the clip-on by instructing to the worker a mold to be used in the hot molding of the clip-on, the present invention is not limited to this content. For example, when use is made of a hot molding device in which various curve shapes can be set by a control from outside, the work instruction relating to the three-dimensional processing of the clip-on can be performed by controlling the curve shape through the work instructing device 41. Besides, the work instruction relating to the three-dimensional processing of the clip-on can be performed by various methods.

In the above-mentioned embodiment, explanation has been made on the example in which upon purchase of eyeglasses anew by a customer who is a wearer in an eyeglasses shop, a clip-on used as attached to the eyeglasses is purchased. However, the present invention is applicable to the case where the eyeglasses and the clip-on are separately purchased. In this case, the contents of the wearer information upon purchase of the eyeglasses is recorded in the eyeglasses shop or the information processing center and when the clip-on is being purchased, the wearer information is called up and only necessary information is input, thereby saving trouble when inputting the wearer information.

Further, it is possible for a customer, who is a wearer that previously purchased eyeglasses lenses and a clip-on, to purchase anew after a certain time only a clip-on that conforms to the previously purchased eyeglasses. In this case, the process can be as follows. The previously used processing data is used again to perform shape processing of the newly purchased clip-on, a fastener for attaching the clip-on to the eyeglasses is selected, and processing for attaching the fastener is performed to the clip-on.

An outline of the treatment in this case is explained with reference to the flowchart shown in FIG. 1 relating to the above-mentioned embodiment. First, instead of the step S1 in FIG. 1, the data of the newly purchased clip-on as well as the order number and the customer ID issued upon the previous purchase are transferred. The treatment in the step S2 becomes unnecessary since the previously used processing data is used. Then, the processing from the steps S3 to S7 can be performed in the same manner as in the first embodiment.

The wearer information to be input in the step S1 may be transferred by inputting, in the screen shown in FIG. 4 displayed in the terminal device 13, the content of the clip-on purchased anew this time in the column of the reference numeral 52 representing the content of the clip-on, and inputting the order number and the customer ID issued upon the previous purchase in the column of the reference numeral 57. Note that the place of purchase of the clip-on need not be identified. For example, the terminal device 13 may be a personal computer in home or a terminal at a convenience store connected to the processing data calculating device 31 in the information center through the Internet. With this construction, it is possible to newly purchase a clip-on from home or a convenience store or the like.

Although various embodiments and modifications have been explained as described above, the present invention is not limited to these contents. Other embodiments conceivable within the technical concept of the present invention are also included within the scope of the present invention.

The disclosure of the following priority application is herein incorporated by reference:
Japanese Patent Application No. 2005-307124 (filed on October 21, 2005).

## Claims

1. A system for producing various optical members to be used by being attached to eyeglasses for assisting a function the eyeglasses, comprising:
a terminal device that transmits an ordering data for ordering an optical member based on eyeglasses information relating to the eyeglasses;
a processing data calculating device that calculates a processing data for three-dimensionally processing the optical member based on the ordering data transmitted by the terminal device; and
a work instructing device that performs a work instruction relating to three-dimensional processing of the optical member based on the processing data calculated by the processing data calculating device.

2. A system for producing an auxiliary optical member for eyeglasses according to claim 1, wherein
the work instructing device performs an instruction as to a mold to be used upon hot molding the optical member as a work instruction relating to the three-dimensional processing of the optical member.

3. A system for producing an auxiliary optical member for eyeglasses according to claim 2, wherein
the mold to be used is selected based on a shape of a surface curve of an eyeglasses lens in the eyeglasses.

4. A system for producing an auxiliary optical member for eyeglasses according to claim 1 or 2, wherein
the eyeglasses information relating to the eyeglasses includes information from which a shape of an eyeglasses lens to be used for the eyeglasses is known.

5. A system for producing an auxiliary optical member for eyeglasses according to any one of claims 1 to 4, wherein
the processing data includes a data used commonly for a work instruction relating to processing of the optical member and a work instruction relating to processing of the eyeglasses.

6. A system for producing an auxiliary optical member for eyeglasses according to any one of claims 1 to 5, wherein
the processing data includes at least one of a functional film selection data for selecting a functional film used for the optical member, a lens selection data for selecting an eyeglasses lens used for the eyeglasses, and a lens shape processing data for processing the eyeglasses lens so as to conform to a shape of an eyeglasses frame.

7. A system for producing an auxiliary optical member for eyeglasses according to any one of claims 1 to 6, wherein
the processing data includes a fixing member selection data for performing an work instruction relating to processing for fitting, to the optical member, a fixing member to be used when attaching the optical member to the eyeglasses.

8. A system for producing an auxiliary optical member for eyeglasses according to any one of claims 1 to 7, wherein
the optical member is any one of a colored clip-on member for allowing a lens of the eyeglasses to be used as a colored lens, a polarization clip-on member having a polarizing effect, and a correction clip-on member that corrects degree of the eyeglasses.

9. A computer readable computer program product, comprising:
a program that is adapted to be used in the processing data calculating device in the system for producing an auxiliary optical member for eyeglasses according to any one of claims 1 to 8, and that is adapted to calculate the processing data based on the ordering data.

10. A method of producing various optical members to be used by being attached to eyeglasses for assisting a function of the eyeglasses, comprising:
transmitting an ordering data for ordering an optical member based on eyeglasses information relating to the eyeglasses;
calculating a processing data for three-dimensionally processing the optical member based on the ordering data; and
performing a work instruction relating to three-dimensional processing of the optical member based on the processing data.
